# EUROPÄISCHE PATENTANMELDUNG

(11) **EP 1 104 089 A2**
(43) Veröffentlichungstag der Anmeldung: **30.05.2001**
(21) Anmeldenummer: 00125430.9
(22) Anmeldetag: 20.11.2000
(51) Int. Cl.: H02P 7/685

(54) **Steuerschaltung für Elektromotoren**

(30) Priorität: 25.11.1999 DE 19956709
(71) Anmelder: Delphi Technologies, Inc., Troy, MI 48007 (US)
(72) Erfinder: Müller, Axel, 28217 Bremen (DE); Trommer, Frank, 51674 Wiehl (DE); Giesen, Marko, 51588 Nümbrecht (DE); Noll, Diethelm, 57589 Birkenbeul (DE)
(74) Vertreter: Manitz, Finsterwald & Partner Gbr

(57) **Zusammenfassung**

Es wird eine Steuerschaltung für Elektromotoren, insbesondere Gleichstrommotoren, beschrieben. Die Steuerschaltung umfaßt zumindest einen Leistungsschalter, durch den jeweils ein Elektromotor an seine Spannungsversorgung anschaltbar ist, wobei der Leistungsschalter zwei Ausgänge aufweist, die jeweils gegengleich mit der Betriebsspannung des Elektromotors und dem Bezugspotential verbindbar sind. Jedem Leistungsschalter sind zumindest zwei Elektromotoren zugeordnet sind, die zueinander parallel geschaltet und mit den Ausgängen des Leistungsschalters verbunden sind. Für jeden Elektromotor ist jeweils zumindest eine Verbindung zwischen einem seiner Anschlüsse und dem damit verbundenen Ausgang des Leistungsschalters über zumindest eine zusätzliche Schalteinheit unterbrechbar ist. Weiterhin ist ein Steuerelement, insbesondere ein Mikroprozessor, zur Ansteuerung der Schalteinheit und/oder des Leistungsschalters vorgesehen.

## Beschreibung

Die vorliegende Erfindung betrifft eine Steuerschaltung für Elektromotoren, insbesondere Gleichstrommotoren, mit zumindest einem Leistungsschalter, durch den jeweils ein Elektromotor an seine Spannungsversorgung anschaltbar ist, wobei der Leistungsschalter zwei Ausgänge aufweist, die jeweils gegengleich mit der Betriebsspannung des Elektromotors und dem Bezugspotential verbindbar sind.

Steuerschaltungen dieser Art werden beispielsweise in Kraftfahrzeugen zur Ansteuerung von Antriebsmotoren für elektrisch verstellbare Außenund Innenspiegel, elektrisch verstellbare Sitze, Verriegelungsmechaniken von Schließanlagen und dergleichen verwendet. Dabei muß üblicherweise pro Motor ein Leistungsschalter vorgesehen sein, wobei diese Leistungsschalter üblicherweise als "intelligente" Leistungsschalter ausgebildet sind, die beispielsweise eine hohe Kurzschlußfestigkeit besitzen und einen sanften Anlauf der angesteuerten Motoren gewährleisten. Übliche Leistungsschalter umfassen dabei MOS-Feldeffekttrarisistoren mit parallel geschalteten Dioden.

In der Praxis haben sich integrierte Leistungsschaltermodule etabliert, die aus einer Zusammenschaltung von zwei Leistungsschaltern bestehen, so daß jeweils durch ein Leistungsschaltermodul bis zu zwei Elektromotoren angesteuert werden können. Sind mehr als zwei Elektromotoren anzusteuern, so müssen mehrere Leistungsschalter bzw. Leistungsschaltermodule eingesetzt werden. Die Verwendung mehrerer Leistungsschalter bzw. Leistungsschaltermodule führt jedoch zu einem erhöhten Platzbedarf und damit verbunden zu erhöhten Kosten. Weiterhin wird beim Einsatz mehrerer Leistungsschalter bzw. Leistungsschaltermodule vermehrt Wärme erzeugt, was insbesondere bei den in Kraftfahrzeugen oftmals beengten Einbaumöglichkeiten Probleme verursachen kann.

Eine Aufgabe der vorliegenden Erfindung ist es, eine Steuerschaltung der eingangs genannten Art so auszubilden, daß der Platzbedarf sowie die Kosten für eine Steuerschaltung zur Ansteuerung von mehreren Elektromotoren minimiert werden können. Weiterhin sollen auch die durch die von den Leistungsschaltern erzeugte Wärme bedingten Probleme reduziert werden.

Diese Aufgabe wird ausgehend von einer Steuerschaltung der eingangs genannten Art erfindungsgemäß dadurch gelöst, daß jedem Leistungsschalter zumindest zwei Elektromotoren zugeordnet sind, die zueinander parallel geschaltet und mit den Ausgängen des Leistungsschalters verbunden sind, daß für jeden Elektromotor jeweils zumindest eine Verbindung zwischen einem seiner Anschlüsse und dem damit verbundenen Ausgang des Leistungsschalters über zumindest eine zusätzliche Schalteinheit unterbrechbar ist, und daß ein Steuerelement, insbesondere ein Mikroprozessor, zur Ansteuerung der Schalteinheit und/oder des Leistungsschalters vorgesehen ist.

Durch die erfindungsgemäße Steuerschaltung ist es möglich, mehrere Elektromotoren durch einen einzigen Leistungsschalter anzusteuern. Auf diese Weise können der Platzbedarf, die Kosten sowie die erzeugte Wärme gegenüber einer Verwendung von mehreren Leistungsschaltern deutlich reduziert werden.

Durch die zusätzliche Schalteinheit kann erfindungsgemäß jeweils eingestellt werden, welcher bzw. welche der an den Leistungsschalter angeschlossenen Elektromotoren zu einem bestimmten Zeitpunkt mit den beiden Anschlüssen an den Ausgängen des Leistungsschalters elektrisch leitend verbunden ist und somit über den Leistungsschalter betätigbar ist. Ein Vorsehen je eines Leistungsschalters für je einen Elektromotor ist mit der erfindungsgemäßen Steuerschaltung somit nicht mehr notwendig.

Nach einer vorteilhaften Ausführungsform der Erfindung ist durch die Schalteinheit zu jedem Zeitpunkt jeweils nur einer der Anschlüsse der parallel geschalteten Elektromotoren mit dem Leistungsschalter elektrisch leitend verbindbar. Bevorzugt werden somit jeweils solche Motoren über eine erfindungsgemäß Steuerschaltung mit einem einzigen Leistungsschalter verbunden, die in der Praxis nicht gleichzeitig betätigt werden. Beispiele hierfür sind die Antriebsmotoren für einen elektrisch verstellbaren Außen- oder Innenspiegel, von denen einer für die vertikale Verstellung und der andere für die horizontale Verstellung zuständig ist. Diese beiden Antriebsmotoren können über einen gemeinsamen Leistungsschalter angesteuert werden, da jeweils zu einem bestimmten Zeitpunkt entweder der vertikale Antriebsmotor oder der horizontale Antriebsmotor, jedoch nie beide gleichzeitig betätigt werden müssen. Ähnliches gilt beispielsweise für den Motor der zentralen Schließanlage und den Antriebsmotor für die Innenverriegelung, die ebenfalls nicht gleichzeitig, sondern immer nacheinander betätigt werden.

Bevorzugt ist die Schalteinheit als Umschalter, insbesondere als Relais, ausgebildet, der in einer gemeinsamen Verbindungsleitung zwischen einem der Ausgänge des Leistungsschalters und je einem Anschluß der Elektromotoren angeordnet ist, und durch den jeweils alternativ einer dieser Anschlüsse mit dem Ausgang des Leistungsschalters elektrisch leitend verbindbar ist. Je nach Anzahl der an einem Leistungsschalter angeschlossenen, zu steuernden Motoren kann der Umschalter dabei als Mehrfachumschalter ausgebildet sein. Durch die Anordnung des Umschalters in der gemeinsamen Verbindungsleitung zwischen dem Ausgang des Leitungsschalters und den jeweiligen Elektromotoren ist sichergestellt, daß jeweils nur einer der Motoren von dem Leistungsschalter mit der Betriebsspannung versorgt werden kann.

Es ist auch möglich, daß die Schalteinheit pro Elektromotor einen steuerbaren Ein/Aus-Schalter, insbesondere einen Triac, umfaßt, wobei jeder Ein/Aus-Schalter in einer separaten Verbindungsleitung zwischen einem der Ausgänge des Leistungsschalters und einem der Anschlüsse des jeweiligen Elektromotors angeordnet ist und zu jedem Zeitpunkt jeweils nur einer der Ein/Aus-Schalter über das Steuerelement elektrisch leitend einschaltbar ist. Durch das Steuerelement kann somit gewährleistet werden, daß nur an einem der Motoren die Betriebsspannung anliegt. Es ist jedoch auch möglich, daß mehrere Motoren gleichzeitig mit Betriebsspannung versorgt werden, falls dies gewünscht und technisch sinnvoll ist.

Nach einer weiteren bevorzugten Ausführungsform der Erfindung bilden zwei Leistungsschalter ein einheitliches Leistungsschaltermodul, wobei jeweils ein Ausgang der beiden Leistungsschalter einen separaten Ausgang des Leistungsschaltermoduls bildet und jeweils die beiden anderen Ausgänge der Leistungsschalter zu einem gemeinsamen Ausgang des Leistungsschaltermoduls zusammengefaßt sind, wobei die beiden separaten Ausgänge mit dem gleichen Potential und der gemeinsame Ausgang gegengleich dazu jeweils mit der Betriebsspannung des Elektromotors und dem Bezugspotential verbindbar sind und jeweils einer der separaten Ausgänge zusammen mit dem gemeinsamen Ausgang ein Ausgangspaar des Leistungsschaltermoduls bildet und an den Ausgangspaaren jeweils zumindest zwei Elektromotoren mit erfindungsgemäs-sen Schalteinheiten angeschlossen sind.

Mit dieser Ausführungsform sind die in der Praxis erhältlichen, integrierten Leistungsschaltermodule erfindungsgemäß so verwendbar, daß anstelle von zwei Elektromotoren drei oder mehrere Elektromotoren angesteuert werden können. Dabei sind durch die Schalteinheit bzw. durch mehrere Schalteinheiten die Verbindungen zwischen dem gemeinsamen Anschluß des Leistungsschaltermoduls und den jeweiligen Anschlüssen der Elektromotoren unterbrechbar. Auf diese Weise ist die Anzahl der erforderliche Schalteinheiten minimierbar, da die allen Motoren gemeinsame Verbindungsleitung, insbesondere bei Verwendung eines Umschalters durch eine einzige Schalteinheit unterbrochen werden kann.

Weitere Ausführungsformen der Erfindung sind in den Unteransprüchen angegeben.

Die Erfindung wird nachfolgend anhand von Ausführungsbeispielen unter Bezugnahme auf die Zeichnung näher erläutert; in dieser zeigen
- Fig. 1: eine erste Ausführungsform der Erfindung und
- Fig. 2: eine zweite Ausführungsform der Erfindung.

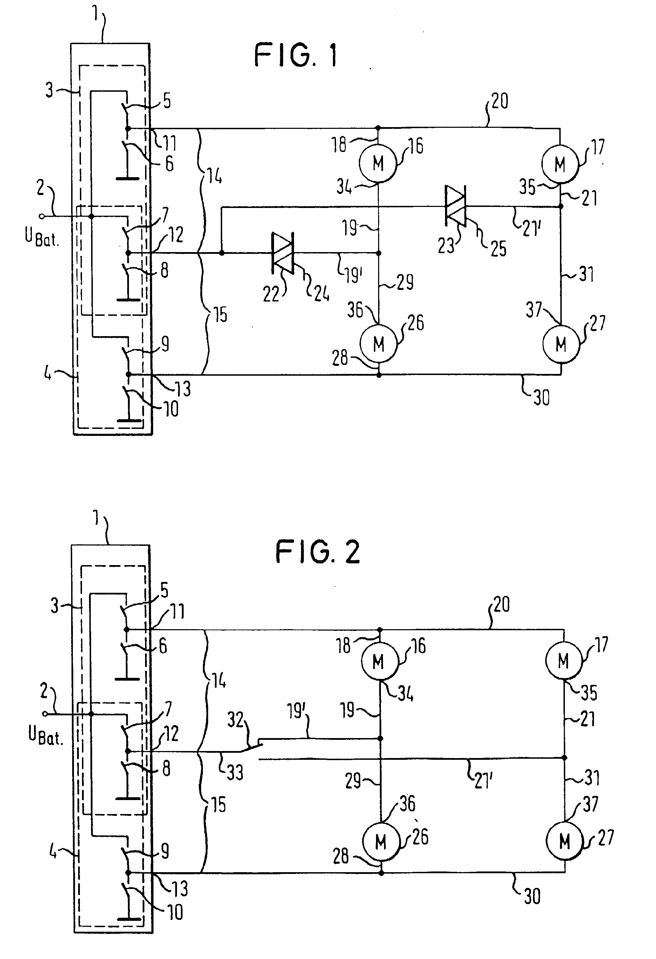

Fig. 1 zeigt ein Leistungsschaltermodul 1 mit einem Eingang 2, an dem die Betriebsspannung, beispielsweise U_{Bat} eines Kraftfahrzeugs, anliegt.

Das Leistungsschaltermodul 1 umfaßt zwei gestrichelt dargestellte Leistungsschalter 3, 4, die zur Bildung des Leistungsschaltermoduls 1 überlappend zusammengeschlossen sind.

Jeder der Leistungsschalter 3, 4 besteht aus zwei MOS-Feldeffekttransistoren mit parallel geschalteten Dioden, die in der Fig. 1 zur Vereinfachung als Schalter 5 bis 10 dargestellt sind. Jeder der Leistungsschalter 3, 4 besitzt zwei Ausgänge 11, 12, 13, wobei durch die Kombination der beiden Leistungsschalter 3, 4 zwei dieser Ausgänge zu einem gemeinsamen Ausgang 12 zusammengeschlossen sind. Dementsprechend sind auch die Schalter 7, 8 den beiden Leistungsschaltern 3, 4 gemeinsam zugehörig dargestellt.

Jeweils die Schalter 5, 7, 9 sind mit dem Eingang 2 des Leistungsschaltermoduls 1 und die Schalter 6, 8, 10 mit dem Bezugspotential, im Falle eines Kraftfahrzeugs mit der Fahrzeugmasse, verbunden.

Der Ausgang 11 ist zwischen den Schaltern 5 und 6 angeschlossen, so daß er wahlweise mit dem Eingang 2 oder dem Bezugspotential verbindbar ist.

Entsprechend ist der Ausgang 12 über die Schalter 7, 8 wahlweise mit der am Eingang 2 anliegenden Betriebsspannung oder dem Bezugspotential verbindbar. Durch eine beispielsweise in einem nicht dargestellten Mikroprozessor vorhandene Steuerlogik ist gewährleistet, daß zum einen jeweils nur einer der Schalter 5, 6 bzw. 7, 8 geschlossen wird und zum anderen die Schalter 5 und 8 bzw. 6 und 7 jeweils gleichzeitig geschlossen werden, so daß an dem durch die Ausgänge 11, 12 gebildeten Ausgangspaar jeweils die Betriebsspannung mit wechselndem Vorzeichen anlegbar ist.

Analoges gilt für das durch die Ausgänge 12, 13 gebildete Ausgangspaar, das über die entsprechend angesteuerten Schalter 7, 8, 9, 10 wahlweise mit der Betriebsspannung mit wechselndem Vorzeichen belegt werden kann.

An das Ausgangspaar 14 sind zwei Elektromotoren 16, 17 angeschlossen, die über Leitungen 18, 19, 19' sowie 20, 21, 21' parallel zueinander geschaltet sind. Dabei ist in der Leitung 19' ein Triac 22 und in der Leitung 21' ein Triac 23 angeordnet, durch die jeweils die Leitung 19' bzw. 21' unterbrochen werden kann, so daß dementsprechend die Anschlüsse 34, 35 der Motoren 16 bzw. 17 von der an dem Ausgangspaar 14 anliegenden Betriebsspannung abgekoppelt ist.

Die Triacs 22, 23 werden dabei über Anschlüsse 24, 25 von einem nicht dargestellten Steuerelement, beispielsweise einem Mikroprozessor angesteuert.

In analoger Weise zu den Motoren 16, 17 sind im unteren Bereich der Fig. 1 zwei Motoren 26, 27 vorgesehen, die über Leitungen 28, 29, 19' bzw. 30, 31, 21' mit dem Ausgangspaar 15 des Leistungsschaltermoduls 1 verbunden sind. Auch diese Motoren 26, 27 sind über die Triacs 22 bzw. 23 abhängig von der Mikroprozessorsteuerung von der an dem Ausgangspaar 15 anliegenden Bezugsspannung abtrennbar bzw. mit dieser verbindbar.

Während eine übliche Steuerschaltung beispielsweise lediglich aus dem Leistungssteuermodul 1 sowie den daran angeschlossenen Motoren 16 und 26 besteht, können durch die in Fig. 1 dargestellte erfindungsgemäße Verschaltung zusätzlich die Motoren 17 und 27 über das gleiche Leistungsschaltermodul 1 angesteuert werden. Soll beispielsweise der Motor 16 angesteuert werden, so werden über das nicht dargestellte Steuerelement die Schalter 5 und 8 geschlossen, so daß an dem Ausgang 11 die Batteriespannung anliegt und der Ausgang 12 auf Masse liegt. Gleichzeitig wird durch den Triac 23 die Leitung 21' unterbrochen, während der Triac 22 auf leitend geschaltet wird. In diesem Fall liegt ausschließlich an dem Motor 16 die Betriebsspannung an, so daß dieser angesteuert wird.

In entsprechender Weise kann jeder der Motoren 16, 17, 26, 27 durch entsprechendes Ansteuern der Schalter 5 bis 10 sowie der Triacs 22, 23 betätigt werden.

Wird anstelle eines dreifachen Leistungsschaltermoduls 1 beispielsweise nur der Leistungsschalter 3 verwendet, so entfallen die Motoren 26, 27, so daß mit einem einzigen Leistungsschalter 3 zwei Motoren 16, 17 angesteuert werden können. Bei einer entsprechenden Erweiterung der Schaltung sind auf diese Weise auch mehr als zwei Motoren ansteuerbar.

Ist ein aus technischen Gründen auftretender Spannungsabfall an den Triacs 22, 23 von ca. 1 bis 2 Volt nicht zulässig, so kann die erfindungsgemäße Steuerschaltung beispielsweise gemäß Fig. 2 ausgebildet sein. Die Steuerschaltung gemäß Fig. 2 unterscheidet sich von der gemäß Fig. 1 dadurch, daß anstelle der Triacs 22, 23 ein einen Umschalter bildendes Relais 32 vorgesehen ist, das in der gemeinsamen Verbindungsleitung 33 zwischen dem gemeinsamen Ausgang 12 und den jeweiligen Anschlüssen 34, 35, 36, 37 der Motoren 16, 17, 26, 27 angeordnet ist.

Durch das nicht dargestellte Steuerelement kann das Relais 32 umgeschaltet werden, so daß in einem Schaltzustand die Motoren 34 und 36 und im anderen Schaltzustand die Motoren 35 und 37 an den Ausgangspaaren 14, 15 des Leistungsschaltermoduls 1 elektrisch leitend anliegen. Je nach Steuerung der Schalter 5 bis 10 können somit auch in diesem Falle über das einzige Leistungsschaltermodul 1 die vier Motoren 34, 35, 36, 37 mit der Betriebsspannung versorgt werden.

Sowohl bei der Ausführungsform nach Fig. 1 als auch nach Fig. 2 ist dabei durch die entsprechende Ansteuerung der Schalter 5 bis 10 eine Umkehr der Drehrichtung der Motoren 34, 35, 36, 37 wählbar.

Auch bei der Ausführungsform nach Fig. 2 können durch entsprechende Ausgestaltung des Relais 32 als Mehrfachumschalter bzw. durch zusätzliche Ein/Aus-Schalter in den jeweiligen Verbindungsleitungen zu zusätzlichen Motoren solche zusätzlichen Motoren durch das einzige Leistungsschaltermodul 1 angesteuert werden. Das Vorsehen eines oder mehrerer weiterer Leistungsschaltermodule ist bei einer erfindungsgemäßen Verschaltung nicht erforderlich.

### Bezugszeichenliste

- 1: Leistungsschaltermodul
- 2: Eingang
- 3: Leistungsschalter
- 4: Leistungsschalter
- 5: Schalter
- 6: Schalter
- 7: Schalter
- 8: Schalter
- 9: Schalter
- 10: Schalter
- 11: Ausgang
- 12: gemeinsamer Ausgang
- 13: Ausgang
- 14: Ausgangspaar
- 15: Ausgangspaar
- 16: Motor
- 17: Motor
- 18: Verbindungsleitung
- 19: Verbindungsleitung
- 19': Verbindungsleitung
- 20: Verbindungsleitung
- 21: Verbindungsleitung
- 21': Verbindungsleitung
- 22: Triac
- 23: Triac
- 24: Steuerleitung
- 25: Steuerleitung
- 26: Motor
- 27: Motor
- 28: Verbindungsleitung
- 29: Verbindungsleitung
- 30: Verbindungsleitung
- 31: Verbindungsleitung
- 32: Relais
- 33: gemeinsame Verbindungsleitung
- 34: Anschluß
- 35: Anschluß
- 36: Anschluß
- 37: Anschluß

## Patentansprüche

1. Steuerschaltung für Elektromotoren (16, 17, 26, 27), insbesondere Gleichstrommotoren, mit zumindest einem Leistungsschalter (3, 4), durch den jeweils ein Elektromotor (16, 17, 26, 27) an seine Spannungsversorgung (UBat) anschaltbar ist, wobei der Leistungsschalter (3, 4) zwei Ausgänge (11, 12; 12, 13) aufweist, die jeweils gegengleich mit der Betriebsspannung (U_{Bat}) des Elektromotors (16, 17, 26, 27) und dem Bezugspotential verbindbar sind,
**dadurch gekennzeichnet,**
daß jedem Leistungsschalter (3, 4) zumindest zwei Elektromotoren (16, 17, 26, 27) zugeordnet sind, die zueinander parallel geschaltet und mit den Ausgängen (11, 12, 13) des Leistungsschalters (3, 4) verbunden sind, daß für jeden Elektromotor (16, 17, 26, 27) jeweils zumindest eine Verbindung (19', 21', 33') zwischen einem seiner Anschlüsse (34, 35, 36, 37) und dem damit verbundenen Ausgang (12) des Leistungsschalters (3, 4) über zumindest eine zusätzliche Schalteinheit (22, 23, 32) unterbrechbar ist, und daß ein Steuerelement, insbesondere ein Mikroprozessor, zur Ansteuerung der Schalteinheit (22, 23, 32) und/oder des Leistungsschalters (3, 4) vorgesehen ist.

2. Steuerschaltung nach Anspruch 1,
**dadurch gekennzeichnet,**
daß durch die Schalteinheit (22, 23, 32) zu jedem Zeitpunkt jeweils nur einer der Anschlüsse der parallel geschalteten Elektromotoren (16, 17, 26, 27) mit dem Leistungsschalter (3, 4) elektrisch leitend verbindbar ist.

3. Steuerschaltung nach Anspruch 1 oder 2,
**dadurch gekennzeichnet,**
daß die Schalteinheit (32) als Umschalter, insbesondere als Relais, ausgebildet ist, der in einer gemeinsamen Verbindungsleitung (33) zwischen einem der Ausgänge (12) des Leistungsschalters (3, 4) und je einem Anschluß (34, 35, 36, 37) der Elektromotoren (16, 17, 26, 27) angeordnet ist, und durch den jeweils alternativ einer dieser Anschlüsse (34, 35, 36, 37) mit dem Ausgang (12) des Leistungsschalters (3, 4) elektrisch leitend verbindbar ist.

4. Steuerschaltung nach einem der vorherigen Ansprüche,
**dadurch gekennzeichnet,**
daß die Schalteinheit pro Elektromotor (16, 17, 26, 27) einen steuerbaren Ein/Aus-Schalter (22, 23), insbesondere einen Triac, umfaßt, daß jeder Ein/Aus-Schalter (22, 23) in einer separaten Verbindungsleitung (19', 21') zwischen einem der Ausgänge (12) des Leistungsschalters (3, 4) und einem der Anschlüsse (34, 35; 36, 37) des jeweiligen Elektromotors (16, 17, 26, 27) angeordnet ist, und daß zu jedem Zeitpunkt jeweils nur einer der Ein/Aus-Schalter (22, 23) über das Steuerelement elektrisch leitend einschaltbar ist.

5. Steuerschaltung nach einem der vorherigen Ansprüche,
**dadurch gekennzeichnet,**
daß die Schalteinheit (22, 23, 32) als zumindest ein Relais, Triac und/oder antiparallel geschaltete Thyristoren ausgebildet ist.

6. Steuerschaltung nach einem der vorherigen Ansprüche,
**dadurch gekennzeichnet,**
daß zwei Leistungsschalter (3, 4) ein einheitliches Leistungsschaltermodul (1) bilden, wobei jeweils ein Ausgang (11, 13) der beiden Leistungsschalter (3, 4) einen separaten Ausgang (11, 13) des Leistungsschaltermoduls (1) bildet und jeweils die beiden anderen Ausgänge der Leistungsschalter (3, 4) zu einem gemeinsamen Ausgang (12) des Leistungsschaltermoduls (1) zusammengefaßt sind, daß die beiden separaten Ausgänge (11, 13) mit dem gleichen Potential und der gemeinsame Ausgang (12) gegengleich dazu jeweils mit der Betriebsspannung (U_{Bat}) des Elektromotors (16, 17, 26, 27) und dem Bezugspotential verbindbar sind, daß jeweils einer der separaten Ausgänge (11, 13) zusammen mit dem gemeinsamen Ausgang (12) ein Ausgangspaar (14, 15) des Leistungsschaltermoduls (1) bildet und daß an den Ausgangspaaren (14, 15) jeweils zumindest zwei Elektromotoren (16, 17, 26, 27) mit Schalteinheiten (22, 23, 32) nach einem der vorhergehenden Ansprüche angeschlossen sind.

7. Steuerschaltung nach Anspruch 4 und 6,
**dadurch gekennzeichnet,**
daß an unterschiedliche Ausgangspaare (14, 15) angeschlossene Motoren (16, 26; 17, 27) jeweils über einen gemeinsamen Ein/Aus-Schalter (22, 23) mit dem gemeinsamen Ausgang (12) verbindbar und von diesem trennbar sind.

8. Steuervorrichtung nach Anspruch 6 oder 7,
**dadurch gekennzeichnet,**
daß durch die Schalteinheit (22, 23, 32) die Verbindung zwischen dem gemeinsamen Ausgang (12) des Leistungsschaltermoduls (1) und den jeweiligen Anschlüssen (34, 35, 36, 37) der Elektromotoren (16, 17, 26, 27) unterbrechbar ist.

9. Steuervorrichtung nach einem der vorherigen Ansprüche,
**dadurch gekennzeichnet,**
daß die Elektromotoren (16, 17, 26, 27) als Antriebsmotoren eines elektrisch verstellbaren Außen- oder Innenspiegels eines Kraftfahrzeugs und/oder als Antriebsmotoren einer Zentralverriegelungsanlage eines Kraftfahrzeugs ausgebildet sind.
